(19)

Europäisches
Patentamt
European
Patent Office
Office européen
des brevets

(11) **EP 3 279 381 A1**

(12) **EUROPEAN PATENT APPLICATION**
published in accordance with Art. 153(4) EPC

(43) Date of publication:
**07.02.2018 Bulletin 2018/06**

(21) Application number: **15887684.7**

(22) Date of filing: **03.04.2015**

(51) Int Cl.:
**D04H 1/728** (2012.01)

(86) International application number:
**PCT/JP2015/060674**

(87) International publication number:
**WO 2016/157539 (06.10.2016 Gazette 2016/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Fuence Co., Ltd.
Saitama 351-0104 (JP)**

(72) Inventors:
• **INOUE, Kozo
Wako-shi
Saitama 351-0104 (JP)**
• **NITTA, Kazuya
Wako-shi
Saitama 351-0104 (JP)**

• **TANAKA, Keizou
Kimitsu-shi
Chiba
2921149 (JP)**
• **NAGASHIMA, Yutaka
Kimitsu-shi
Chiba
2921149 (JP)**
• **YAMADA, Shunsuke
Kimitsu-shi
Chiba
2921149 (JP)**

(74) Representative: **Haseltine Lake LLP
Lincoln House, 5th Floor
300 High Holborn
London WC1V 7JH (GB)**

(54) **NANOFIBER STRUCTURE**

(57)     A transparent soluble polyimide resin was dissolved in N, N-dimethyacetamide, and a sample solution whose concentration was 10 weight percent was produced. This sample solution is put in a container CNT which is attached to an apparatus shown in FIG. 1, whereby a nanofiber structure was produced. The produced polyimide nanofiber structure acquired the excellent water resistance, air permeability and moisture permeability while maintaining the physical properties inherent in a polyimide, such as high heat resistance and insulation. Further, when a nanofiber structure is produced in a similar manner from a different polyimide resin, the nanofiber structure maintains excellent adhesiveness.

FIG.1

**Description**

TECHNICAL FIELD

The present invention relates to a nanofiber structure, and more particularly to a nanofiber structure of a polyimide resin, which has air permeability, moisture permeability, and water resistance. That is, the present invention relates to a nanofiber structure in which a polyimide resin having physical properties such as high heat resistance is transformed into nanofibers so as to have air permeability, moisture permeability, and water resistance.

BACKGROUND ART

Conventionally, there has been an ePTFE resin (expanded polytetrafluoroethylene), which has high heat resistance, insulation, chemical stability, air permeability, moisture permeability, and water resistance. The ePTFE resin is formed by thinning a PTFE resin with special stretching technology, thereby giving it a porous character, and adding air permeability, moisture permeability, and water resistance thereto. Although the ePTFE resin is typically used for rain gear which requires both waterproofness and moisture permeability, outdoor products such as clothes, and apparel products, uses thereof are not limited thereto and they are used in a very wide range of industrial fields.

It is pointed out that the ePTFE resin has the bad balance of air permeability and water resistance (the ePTFE resin has the general character in which if the air permeability thereof is improved, the water resistance thereof becomes very bad), that still higher heat resistance thereof is called for now, and that a price thereof is high as industrial material.

On the other hand, a polyimide resin has the highest heat resistance, insulation, and chemical stability among high-performance resins, and is used in many industrial fields because of these characteristics. However, it was very difficult to dissolve the polyimide resin in a solvent or to melt it, after imidization (namely, after manufacturing).

Moreover, formation of porosity in the polyimide resin, processing into nanofibers and nanoparticulatation etc. have been also attempted in order to improve or change the physical properties of the polyimide resin.

As patent documents regarding the above-mentioned polyimide resin-related prior art technology, there are, for example, Japanese Patent Application Publication No. 2013-513932, "Electrochemical cell comprising a separator including a nanoweb consisting essentially of nanofibers of fully aromatic polyimide" (PATENT DOCUMENT 1), Japanese Patent Application Publication No. 2013-513931, "Multi-layer article comprising polyimide nanoweb" (PATENT DOCUMENT 2), Japanese Patent Application Publication No. 2009-243031, "Nanofiber, electrolyte film, membrane electrode assembly, and fuel cell" (PATENT DOCUMENT 3), Japanese Patent Application Publication No. 2009-270210, "Manufacturing method of ultrafine nanofibers" (PATENT DOCUMENT 4), and Japanese Patent Application Publication No. 2007-92078, "Manufacturing method of a polyimide porous membrane" (PATENT DOCUMENT 5) etc.

In addition, as nonpatent literature, there are NON-PATENT LITERATURE 1: Satoshi Yoda et al., "Polyimide having flexibility and excellence in heat resistance = silica nanocomposite porous body," and NON-PATENT LITERATURE 2: "polyimide porous membrane." However, although the polyimide resin is based on such state-of-the-art technology, no polyimide resin having the air permeability, moisture permeability, and water resistance which is equal to ePTFE resin has been developed.

PRIOR ART DOCUMENTS

PATENT DOCUMENTS

PATENT DOCUMENT 1: Patent Application Publication No. 2013-513932, "Electrochemical cell comprising a separator comprising a nanoweb consisting essentially of nanofibers of fully aromatic polyimide"
PATENT DOCUMENT 2: Patent Application Publication No. 2013-513931, "Multi-layer article comprising polyimide nanoweb".
PATENT DOCUMENT 3: Japanese Patent Application Publication No. 2009-243031, "Nanofiber, electrolyte film, membrane electrode assembly, and fuel cell"
PATENT DOCUMENT 4: Japanese Patent Application Publication No. 2009-270210, "Manufacturing method of ultrafine nanofibers"
PATENT DOCUMENT 5: Japanese Patent Application Publication No. 2007-92078,"Manufacturing method of a polyimide porous membrane"

NON-PATENT LITERATURE 1: Satoshi Yoda et al., "polyimide having flexibility and excellence in heat resistance = silica nanocomposite porous body", internet website: http://www.aist.go.jp/aist_j/press_release/pr2013/pr20130121/ pr20130121.html

NON-PATENT LITERATURE 2: "Polyimide porous membrane", Website: http://www.ube-ind.co.jp/japanese/rd/polyimide_porous_film.htm

## SUMMARY OF THE INVENTION

### PROBLEMS TO BE SOLVED BY THE INVENTION

Although an ePTFE resin is breakthrough material which has the physical properties of water resistance, and moister permeability and air permeability in addition to high heat resistance, insulation, and chemical stability, as mentioned above, there is a drawback that the balance of air permeability and water resistance is bad. In order to improve the air permeability thereof, it is necessary to increase the porosity (to make the hole density high or to enlarge the diameter of holes). On the other hand, the water resistance thereof becomes low when the porosity becomes high. On the contrary, when the porosity is made low in order to improve the water resistance thereof, the air permeability thereof becomes low. Thus, the air permeability of the material, which is the ePTFE resin, and the water resistance thereof have a trade-off relation.

As mentioned above, there is a polyimide resin which has heat resistance far higher than that of the ePTFE resin etc., but unlike the ePTFE resin, it is very difficult to mechanically extend the polyimide resin due to the strength of the physical properties thereof. Therefore, attempts to change the physical properties and the characteristics of the polyimide resin have been made by using technology other than the mechanical stretching technology. For example, although some technologies which increase the porosity of a polyimide resin have been developed like the conventional technology mentioned above, no polyimide resin having the air permeability, moister permeability, and water resistance which exceeds those of the ePTFE resin, has been developed. Moreover, a manufacturing cost of the ePTFE resin is high, and the ePTFE resin is high price material, so that more cost reduction is also called for.

Although, for a long time, a polyimide could not be dissolved in a solvent, a special solvent for melting the polyimide resin has been developed in recent years. Furthermore, a polyimide resin which can be dissolved with a general-purpose solvent has also been developed.

After researches and contemplation for solving the above-mentioned problems, the present inventors came up with a technique for forming a polyimide solution, in which a polyimide resin is dissolved in a solvent, into nanofibers by the Electrospray Deposition Method (ESD method). Furthermore, by researches and developments under various conditions, they found out that a polyimide resin, which is formed into nanofibers, has water resistance, moisture permeability, and air permeability with a sufficient balance, and has the characteristics equivalent to or more than those of an ePTFE resin. Furthermore, they found out that it is possible to add adhesion properties to the polyimide resin, which is formed into nanofibers.

It is an object of the present invention to offer a nanofiber structure of a polyimide resin, and in particular to offer a nanofiber structure which has air permeability, moisture permeability, water resistance, adhesiveness, etc.

### MEANS OF SOLVING THE PROBLEMS

In order to solve the above mentioned problem, a nanofiber structure according to the first invention comprises a polyimide resin having the following structure:

(1) A void ratio thereof is 75 % or more.
(2) An average pore diameter distribution thereof is 0.5-2.0 $\mu$m.
(3) A film thickness thereof is 50 $\mu$m or less.

Moreover, a nanofiber structure according to the second invention is characterized in that a formation of nanofibers is carried out by the electrospray deposition method.

Moreover, a nanofiber structure according to the third invention is characterized in that any change in a nanofiber structure does not occur even if it is heated at 400 °C for 16 hours.

Further, a nanofiber structure according to the fourth invention is characterized in that the air permeability thereof is 4.55 cc/cm2/s or more in the JIS-L1096 air permeability A method (Frazier method), or 1.68 or less s/300 cc in the JIS-L1096 air permeability B method (Gurley method).

Furthermore, a nanofiber structure according to the fifth invention is characterized in that a moisture permeation resistance (RET) is 3.0 (m2·Pa/W) or less in the ISO11092 method.

In addition, a nanofiber structure according to the sixth invention is characterized in that the water resistance thereof is 0.01 MPa or more in the JIS-L1092 water resistance test B method (High-pressure water method).

Moreover, a nanofiber structure according to the seventh invention is characterized in that the thermal conductivity thereof is within a range of from 0.04 - 0.05 W/mK.

Moreover, a nanofiber structure according to the eighth invention is characterized in that the nanofiber structure has adhesion properties.

As mentioned above, although a nanofiber structure is explained as the means for solving the problem, the present invention can be also realized as a manufacturing method of a nanofiber structure which is substantially equivalent thereto, so that it should be understood that they are within the scope of the present invention.

EFFECTS OF THE PRESENT INVENTION

According to the present invention, it becomes possible to offer a nanofiber structure of a polyimide resin.

BRIEF EXPLANATION OF THE DRAWINGS

[FIG. 1] FIG. 1 is a conceptual diagram showing the fundamental configuration of an electrospray deposition apparatus.

[FIG. 2] FIG. 2 shows SEM photographs of a nanofiber structure produced according to an Example 1, wherein a polyimide resin KPI-MX 300F (75) powder is used as material.

[FIG. 3] FIG. 3 is graphs showing a pore diameter distribution of the nanofiber structure produced according to the Example 1, wherein the polyimide resin KPI-MX 300F (75) powder is used as material.

[FIG. 4] FIG. 4 shows SEM photographs of a nanofiber structure produced according to an Example 2, wherein a polyimide resin KPI-MX300F (100) powder is used as material.

[FIG. 5] FIG. 5 shows graphs showing a pore diameter distribution of the nanofiber structure produced according to the Example 2, wherein the polyimide resin KPI-MX300F (100) powder was used as material.

[FIG. 6] FIG. 6 is a diagram showing physical properties of the nanofiber structures in the Examples 1 and 2.

[FIG. 7] FIG. 7 is a diagram showing a result of study of a high temperature influence to a nanofiber structure in the Example 2.

[FIG. 8] FIG. 8 is a diagram showing a result of study of a high temperature influence to a nanofiber structure of the Example 2.

[FIG. 9] FIG. 9 is a diagram showing a result of study of a high temperature influence to a nanofiber structure of the Example 2.

[FIG. 10] FIG. 10 is a table of measurement of physical properties of water resistance and air permeability about a nanofiber structure of the Examples 1 and 2.

[FIG. 11] FIG. 11 is a table of measurement of physical properties of water resistance and air permeability of the nanofiber structure of the Example 2, and Comparative Examples 3 and 4;

[FIG. 12] FIG. 12 is a table of measurement of physical properties of air permeability of nanofiber structures in the Examples 1 and 2 and a Comparative example 5.

EMBODIMENTS

Embodiments of the present invention will be explained below in detail, referring to drawings.

<Electrospray Deposition Method>

Before explanation of the embodiments of the present invention, the principle about the electrospray deposition method (ESD method) used in the embodiments of the present invention and an electrospray deposition apparatus (ESD: electrostatic spraying apparatus) which can carry out the electrospray deposition method will be explained.

<Electrospray Deposition Apparatus>

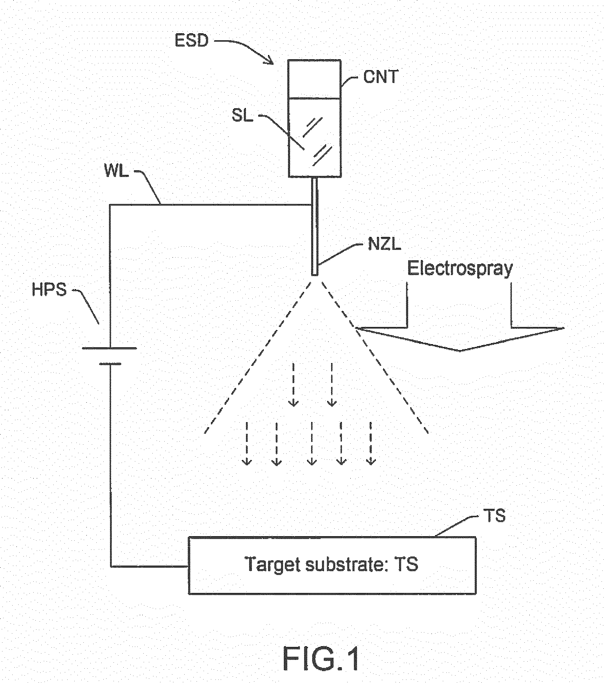

FIG. 1 is a conceptual diagram showing the fundamental configuration of the electrospray deposition apparatus. As shown in the figure, a container CNT contains a sample solution SL. The sample solution SL is, for example, an organic macromolecular solution or polymer fluid etc. In this embodiment, the sample solution is, for example, a polyimide dissolved or dispersed in a solvent, namely, a polyimide solution.

The ESD method is a very complicated physical phenomenon, and although the entire process has not been figured out, it is generally considered as a phenomenon set forth below. The sample solution is stored in a nozzle NZL in the shape of a thin capillary, and thousands to tens of thousands volt voltage is applied to a target substrate TS (opposite electrode) that faces this nozzle. At the tip of the capillary, a powerful electric field is generated due to effects of electric field concentration, so that charged microdroplets collect on a liquid surface so that a corn is formed (so-called Taylor Cone). Furthermore, the sample solution breaks the surface tension at the tip, so as to become a jet. The jet is heavily charged and serves as a spray due to repulsion of electrostatic force (coulomb explosion). The droplet formed by the spray is very small, so that the solvent is evaporated and dried in a short time, thereby producing fine nanoparticles or nanofibers. Of course, a deposition thereof is also possible in a wet state where it is not evaporated and dried. The fine electrified nanoparticles and nanofibers with small diameters are drawn to the target substrate TS which functions as an opposite electrode due to an electrostatic force. A pattern of deposit can be controlled by an insulator mask or an auxiliary electrode, which is not illustrated. As long as the sample is in a liquid form, it is not limited to a solution and may be dispersion liquid.

Moreover, suitably, an extrusion pressure towards the nozzle NZL side is applied to the sample solution in the container CNT by an air pressure syringe pump and a plunger etc. (a discharge means, which is not shown in the figures). The extrusion pressure is given thereto by, for example, a stepping motor and a screw feeding mechanism (not shown). An inside pressure increases within the container CNT, so that the sample solution SL which is subject to the extrusion pressure is discharged from the tip of the nozzle NZL. As mentioned above, it becomes possible to make adjustment to a suitable discharge speed by providing adjustment mechanism (a stepping motor and a screw feeding mechanism) which adjusts the sample solution discharge speed.

The nozzle NZL is made of metal, and positive voltage is supplied through a wire WL made from a conductor from a high-voltage power supply HPS. A minus side of the high-voltage power supply HPS is connected to the target substrate TS (a substrate, which is used as an opposite electrode). A positive voltage is impressed to the sample solution SL through the nozzle NZL by impressing voltage from the high-voltage power supply HPS, whereby the solution is positively charged. In addition, the polarity of the voltage applied to the sample solution SL may be negative.

Moreover, when producing a nanofiber structure, it is suitable to place a nonwoven fabric on the target substrate TS, and deposit the nanofiber structure on the nonwoven fabric. Moreover, various conditions, such as a level of voltage, concentration of the sample solution, kinds of polyimide as a sample, and a kind of solvent, are adjusted, so that a nanofiber structure is produced.

The material, with which the spraying is carried out becomes fibers and droplets and is repeatedly divided while flying by repulsion due to electrification, thereby forming nanofibers or nanoparticles. Since the material, with which the spraying is carried out is in nano size so that a surface area thereof is large, the material with which the spray was carried out will be almost dried, when they reaches the substrate. The form and size thereof can be changed according to the spray conditions, so that, for example, when a macromolecular solution is used, thick nanofibers can be formed if a molecular weight thereof is made large and the concentration thereof is made high greatly, and thin nanofibers or nanoparticles can be formed if the molecular weight is made small and the concentration is made low. In addition, various conditions, such as voltage and the distance between the nozzle and the substrate, ambient temperature, humidity, etc. exert influence thereon. In this embodiment, various solvent-soluble polyimide resins were used as samples, and nanofibers were produced under various conditions, and the heat resistance, the conductivity, air permeability and moisture permeability and water resistance etc. were confirmed in a method described as the embodiments. As the electrospray deposition apparatus, not only the above-mentioned apparatus but a different type of ESD apparatuse can be also used therefor. Specifically, a method of using air current, which is disclosed in Re-Publication of PCT International Publication No. 2009/060898 and which was developed by applicants, is suitable for a mass-production purpose.

<Example 1>

A powder of a transparent solvent-soluble polyimide resin (KPI-MX 300F (75) manufactured by Kawamura Sangyo Co., Ltd.) in amount of 10 grams was dissolved in N, N-dimethyacetamide (purity 97.0 %, produced by Wako Pure Chemical Industries, Ltd.) in amount of 90 grams, whereby a sample solution whose concentration was 10 weight percent was produced in amount of 100 grams. This sample solution in amount of 5 mL was put in the container CNT, which was a syringe made of polypropylene (PSY-30E-M produced by Musashi Engineering Inc.), wherein the metal nozzle NZL (MN-23G-13 manufactured by Iwashita Engineering, Inc.) shown in the FIG. 1, whose inner diameter was 0.34 mm, was attached to the syringe. The container CNT was attached to an electrospray deposition apparatus (Esprayer ES-2300 manufactured by Fuence Co., Ltd.). A polyester mesh (T-N0280T manufactured by NBC Meshtec Inc.) whose size was A3, was used as base material on the target substrate TS (collector substrate). As the conditions of this electrospray, the voltage between the nozzle NZL and the collector (target substrate TS) was 26-30 kV, the distance between the nozzle and the collector was 15 cm, and the liquid feed pressure was 0.010 - 0.015 MPa, under which the entire base material was scanned so as to evenly put the spray thereon from front to back and from side to side, whereby the nanofiber structure of polyimide was obtained. In addition, other polyimide nanofiber structures were obtained under the same conditions except for the solution concentration of 17 weight percent.

<Example 2>

A powder of a transparent solvent-soluble polyimide resin (KPI-MX 300F (100) produced by Kawamura Sangyo Co., Ltd.) in amount of 10 grams was dissolved in N,N-Dimethylacetamide (purity 97.0 %, produced by Wako Pure Chemical Industries, Ltd.) in amount of 90 grams, whereby a sample solution whose concentration was 10 weight % was produced in amount of 100 grams. This sample solution in amount of 5 mL was put in the container CNT, which was a syringe made of polypropylene (PSY-30E-M manufactured by Musashi Engineering Inc.), wherein the metal nozzle NZL (MN-23G-13 manufactured by Iwashita Engineering, Inc.) shown in the FIG. 1, whose inner diameter was 0.34 mm, was attached to the syringe. The container CNT was put on the electrospray deposition apparatus (Esprayer ES-2300 manufactured by Fuence Co., Ltd.). A polyester mesh (T-N0280T produced by NBC Meshtec Inc.) whose size was A3, was used as base material on the target substrate TS (collector substrate). As the conditions of this electrospray, the voltage between the nozzle NZL and the collector (target substrate TS) was 26-30 kV, the distance between the nozzle and the collector was 15 cm, and the liquid feed pressure was 0.010 - 0.015 MPa, under which the entire base material was scanned so as to evenly put the spray thereon from front to back and from side to side, whereby the nanofiber structure of polyimide was obtained.

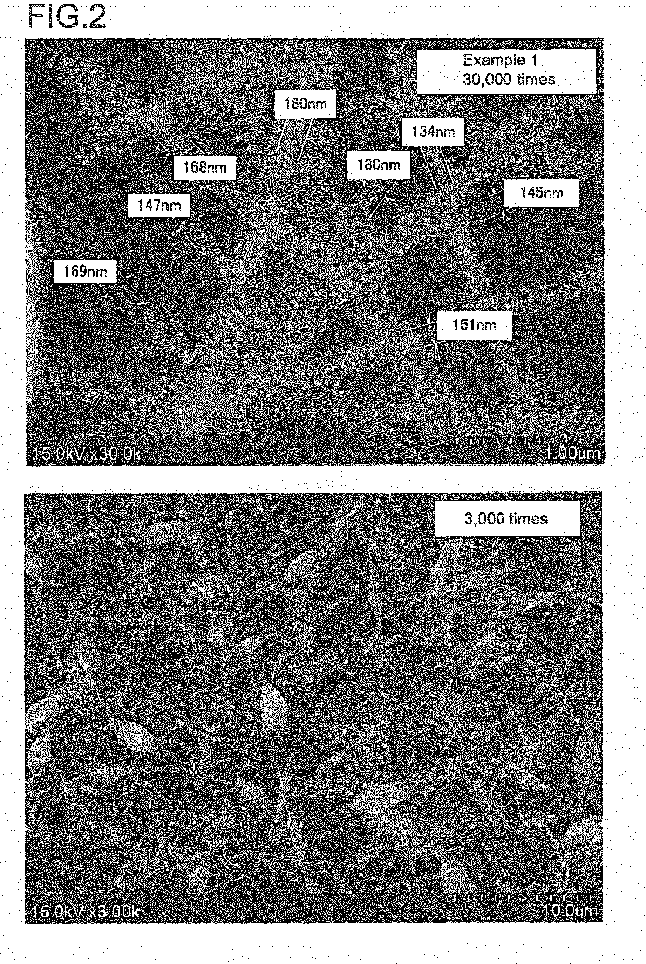

FIG. 2 shows SEM photographs of a nanofiber structure produced according to an Example 1, wherein a polyimide resin KPI-MX 300F (75) powder was used as material. The upper part of the figure shows a SEM photograph taken at a magnification of 30,000 times wherein a plurality of diameters of nanofibers are shown. The diameters were 169, 147, 168, 180, 134, and 145 or 151 nm, and a distribution thereof can be observed in a range of from 134 to 180 nm in the photographed portion. The lower part of the figure shows a SEM photograph taken at a magnification of 3,000 times.

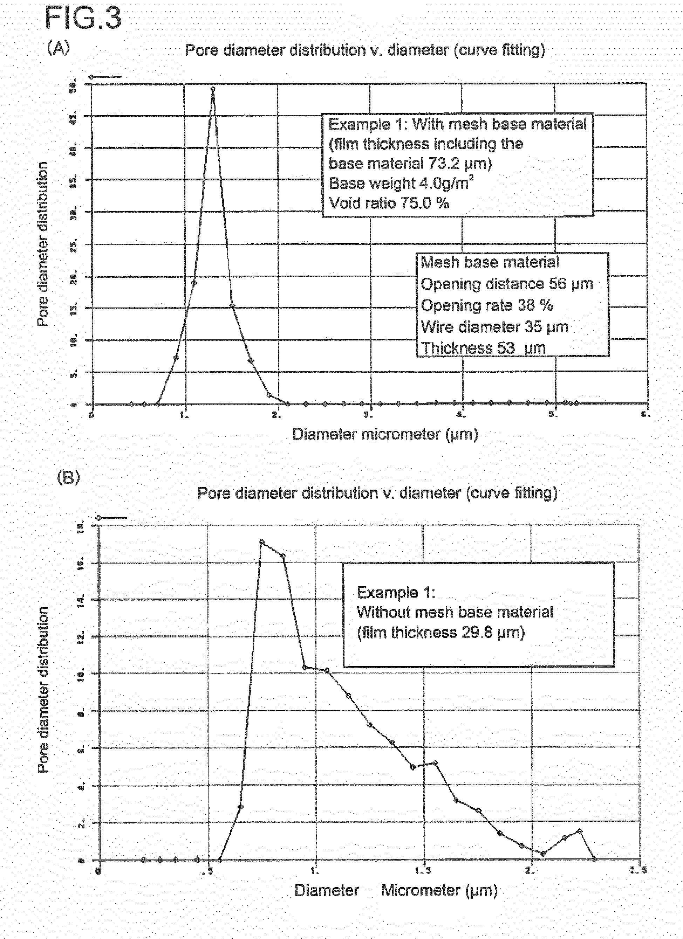

FIG. 3 is graphs showing a pore diameter distribution of the nanofiber structure produced according to the Example 1, wherein the polyimide resin KPI-MX 300F (75) powder was used as material. The measurement was carried out by a pore diameter distribution measuring device (Automated Perm Porometer CFP-1100A manufactured by PMI). FIG. 3(A) shows a measurement result of a pore diameter distribution in a nanofiber structure containing a mesh base material, and FIG. 3(B) shows a measurement result of a pore diameter distribution in a nanofiber structure without a mesh base material. The film thickness of the nanofiber structure of (A), which included the mesh base material, was 73.2 $\mu$m, a base weight thereof was 4.0 g/m$^2$, and a void ratio thereof was 75.0 %. In addition, the void ratio was obtained by the expression set forth below.

$$\text{Void ratio (\%)} = (1 - \text{bulk density} / \text{true density}) \times 100$$

The film thickness of a nanofiber structure without the mesh base material of (B) was 29.8 $\mu$m. And the data of the mesh base material of (A) is set forth below.

Distance between openings          56 $\mu$m
Opening rate        38 %
Wire diameter          35 $\mu$m
Thickness          53 $\mu$m

It can be found from (A) that the pore diameters were distributed from about 0.6 $\mu$m to 2 $\mu$m, and the peak of distribution was about 1.2 - 1.3 $\mu$m. It can be found from (B) that the pore diameters were distributed from about 0.5 $\mu$m to 2.3 $\mu$m, and the peak of distribution (center value) was about 0.7 - 0.8 $\mu$m. Incidentally, the average pore diameter of (A) was 1.25 $\mu$m, and the average pore diameter of (B) was 1.02 $\mu$m. Although the peak value in the graph shown in the figure was obtained after a curve fitting was applied thereto, and data obtained before the curve fitting was applied thereto shifts a little therefrom, the peak value of (A) was 1.18 $\mu$m and the peak value of (B) was 0.77 $\mu$m.

According to the present Example and Examples explained blow, the polyimide nanofiber structure whose physical properties is controlled as set forth below can be manufactured.

(1) A void ratio thereof is 75 % or more.
(2) An average of the pore diameter distribution thereof is 0.5 - 2.0 $\mu$m.
(3) A film thickness thereof is 50 $\mu$m or less.

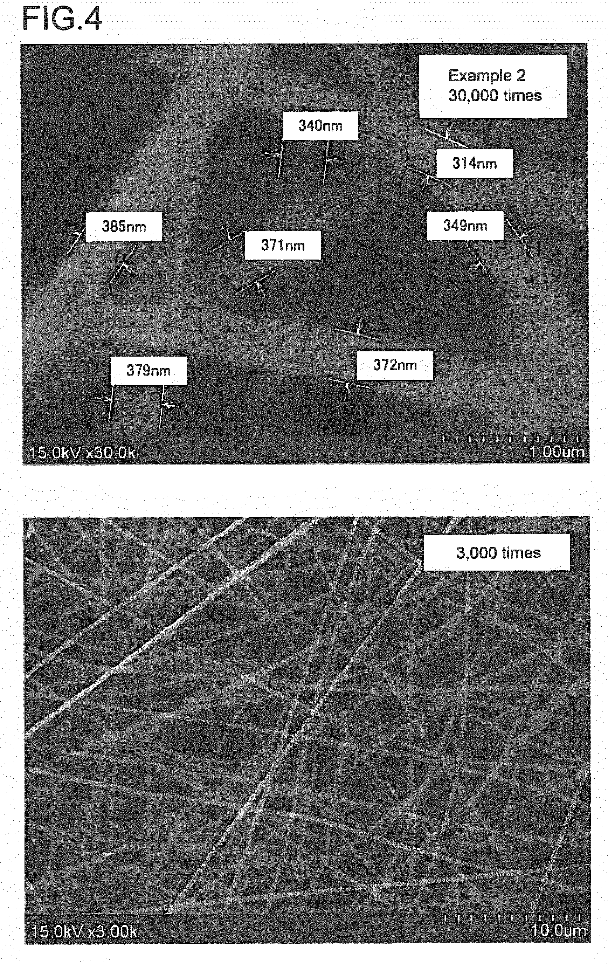

FIG. 4 shows SEM photographs of a nanofiber structure which was produced according to the Example 2, wherein a polyimide KPI-MX300F (100) powder was used as material. The upper part of the figure shows a SEM photograph taken at a magnification of 30,000 times wherein a plurality of diameters of nanofibers are shown. The diameters were 314, 340, 349, 371,372, and 379 or 385 nm, and a distribution thereof can be observed in a range of from 314 to 385 nm in the photographed portion. The lower part of the figure shows a SEM photograph taken at a magnification of 3,000 times.

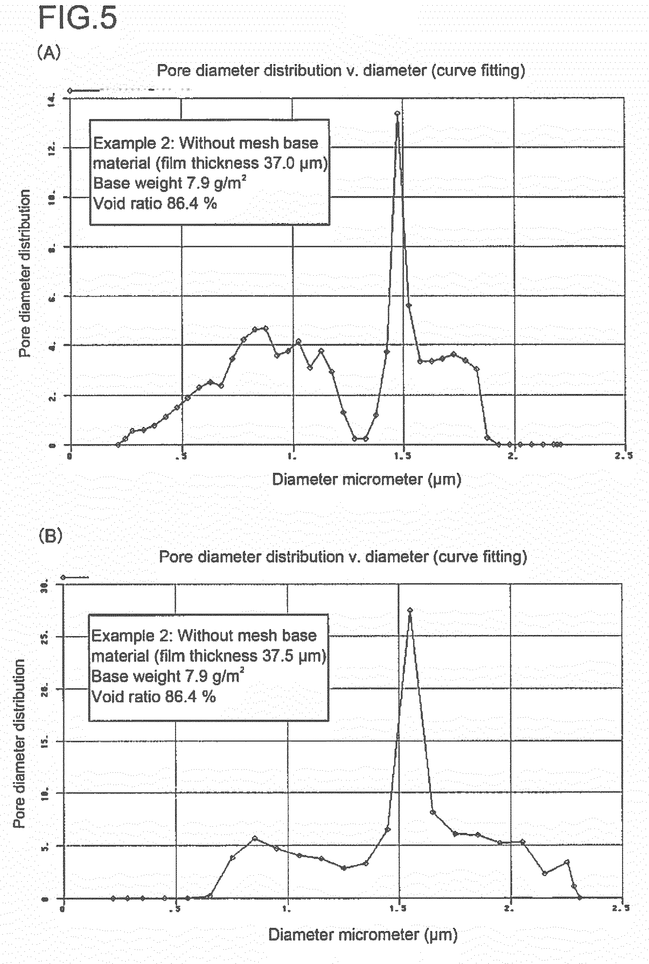

FIG. 5 shows graphs showing a pore diameter distribution of a nanofiber structure which was produced according to the Example 2, wherein a polyimide resin KPI-MX300F (100) powder was used as material. The measurement was carried out by the same apparatus as that shown in FIG. 3. FIG. 5(A) shows a measurement result of a pore diameter distribution in a nanofiber structure without a mesh base material, and FIG. 5(B) shows a measurement result of a pore diameter distribution in a nanofiber structure without a mesh base material, which was a separate part. A film thickness of the nanofiber structure of (A) was 37.0 $\mu$m, a base weight thereof is 7.9 g/m$^2$ and a void ratio thereof is 86.4 %. A film thickness of the nanofiber structure of (B) without the mesh base material was 37.5 $\mu$m.

It can be found from (A) that the pore diameters were distributed from about 0.2 $\mu$m to 2 $\mu$m, and the peak of distribution was about 1.4 - 1.5 $\mu$m. It can be found from (B) that the pore diameters were distributed from about 0.6 $\mu$m to 2.3 $\mu$m, and the peak of distribution was about 1.5 - 1.6 $\mu$m. Incidentally, the average pore diameter of (A) was 1.14 $\mu$m, and the average pore diameter of (B) was 1.57 $\mu$m. Although the peak value in the graph shown in the figure was a value obtained after a curve fitting was applied, and data obtained before the curve fitting was applied shifted a little therefrom, the peak value of (A) was 1.45 $\mu$m and the peak value of (B) was 0.55 $\mu$m.

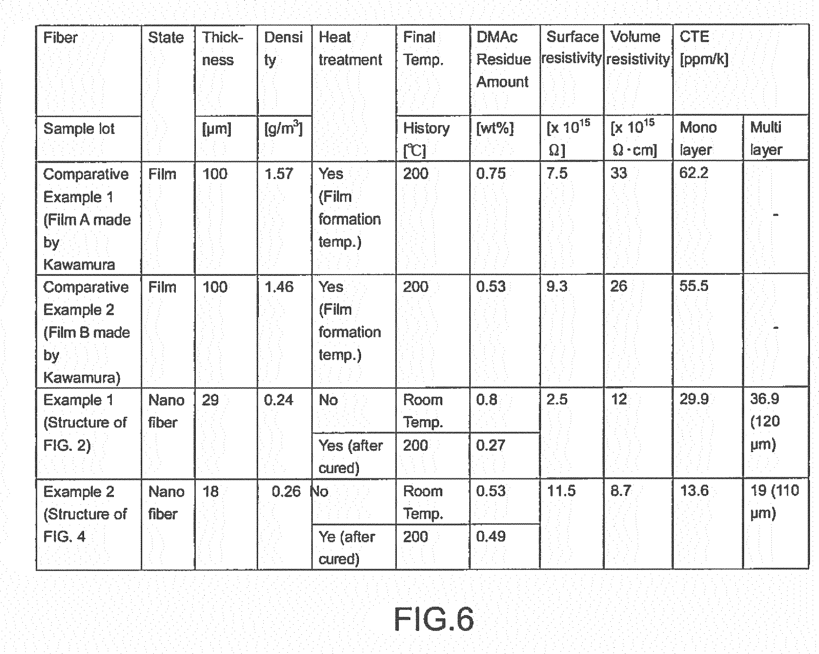

FIG. 6 is a diagram showing physical properties of the nanofiber structures according to the Examples 1 and 2. The physical properties of a commercial polyimide film are shown therein as Comparative Examples 1 and 2. The physical property values of two kinds of polyimide nanofiber structures according to Examples 1 and 2 were measured, one of which was heat treated at 200 °C and the other of which was at room temperature. A DMAc (dimethylacetamide) residual amount was computed from the weight reduction between 100 and 200 °C using the TGA method. The surface and volume resistivity was measured by a double ring electrode method. Moreover, the CTE was measured under the condition set forth below by the TMA method. "It was calculated from a change rate in a temperature drop between 80 - 180 °C after being heated from 40 to 210 °C (5 °C / min) and then held for 10 minutes at 210 °C."

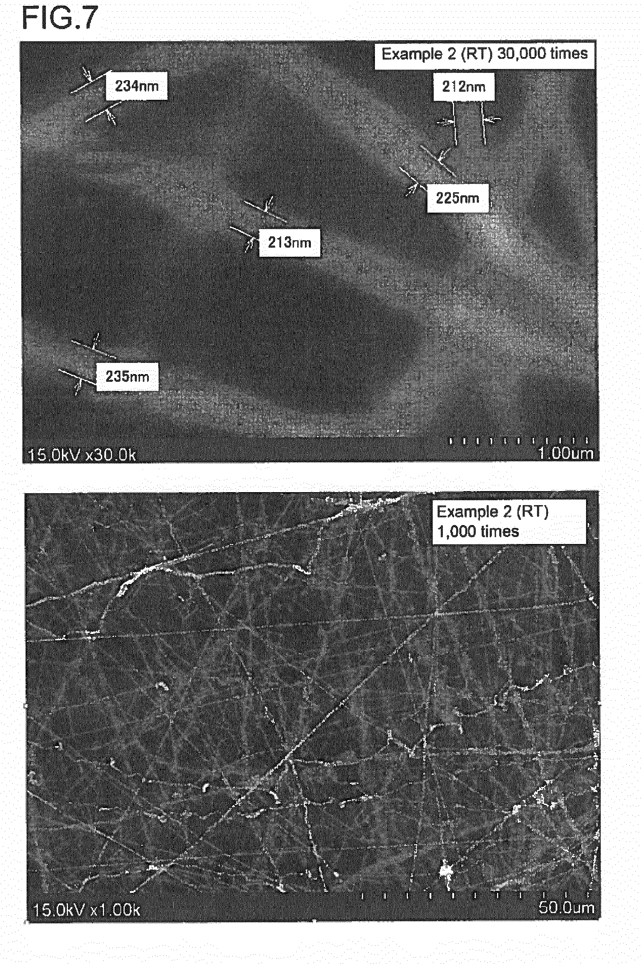

In the Examples 1 and 2, it can be found that the DMAc residual amount was in the same range as that of Comparative Examples 1 and 2 even without a heat treatment. In addition, in both the Examples 1 and 2, the surface and volume resistivity was 15th to 16th power $\Omega$ even in 20 - 30 $\mu$m, and thus shows insulation properties. Further, since deformation was observed in a monolayer due to the weight of a jig, the coefficient of thermal expansion (CTE) was measured by using lamination. It is found that in both the Examples 1 and 2, values of the coefficient of thermal expansion (CTE) were good, and they had a sufficient heat resistance even at 200 °C or higher. Thus, the nanofiber structure of the polyimide resin according to the present Example had a sufficient heat resistance, but as shown in SEM photographs of FIGS. 7, 8 and 9, further heat-resistant examinations were conducted in severer heat environment (400 °C).

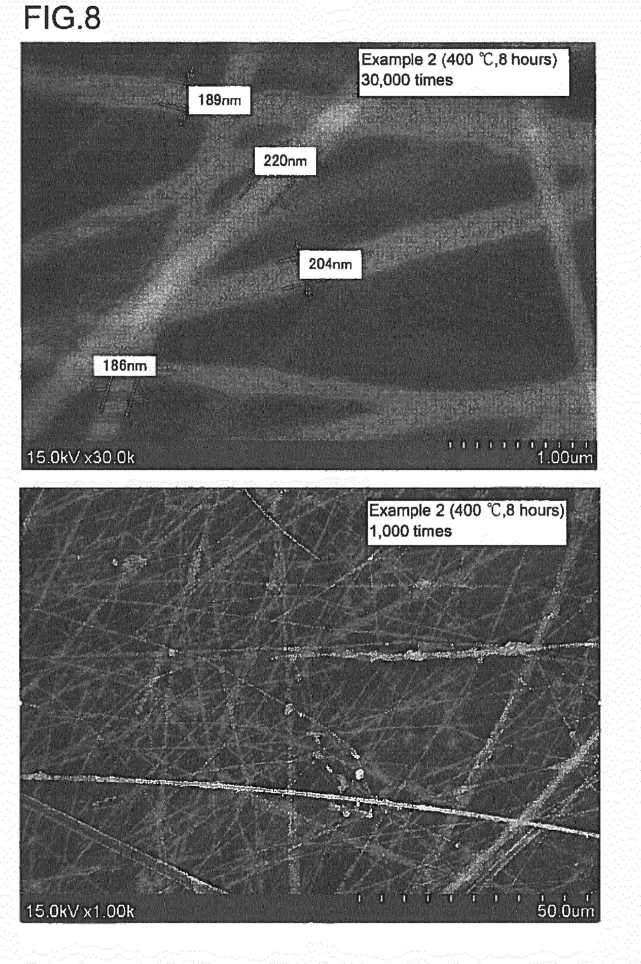

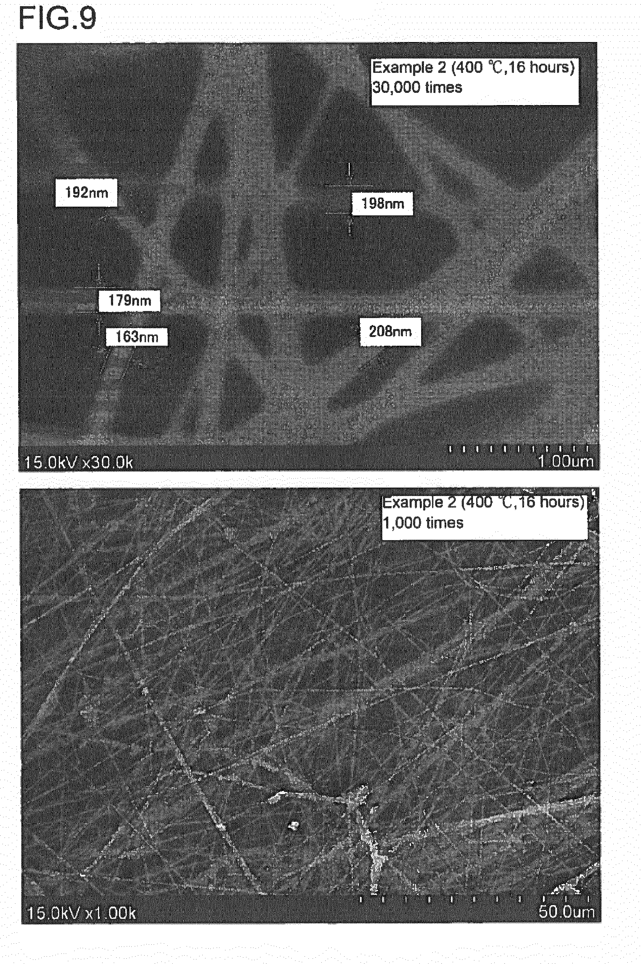

FIGS. 7, 8 and 9 are diagrams showing results of study of a high temperature influence to a nanofiber structure of the Example 2. FIG. 7 shows SEM photographs at room temperature, FIG. 8 shows SEM photographs of a nanofiber structure which was placed in an electric furnace (Ropet Kobata Electric Industries Ltd., electric furnace post III type) at 400 °C for 8 hours, and FIG. 9 is SEM photographs of a nanofiber structure placed therein for 16 hours.

FIG. 7 shows a photograph of a nanofiber structure at room temperature, wherein the upper part of the figure shows a SEM photograph taken at a magnification of 30,000 times and a plurality of diameters of nanofibers are shown. The diameters were 234, 235, 213, and 212 or 225 nm, and a distribution thereof can be observed in a range of from 212 to 235 nm in the photographed portion. The lower part of the figure shows a SEM photograph taken at a magnification of 1,000 times.

FIG. 8 shows a photograph of a nanofiber structure which was heat treated at 400 °C for 8 hours, wherein the SEM photograph shown in the upper part was taken at a magnification of 30,000 times, and a plurality of diameters of nanofibers are shown. The diameters were 189, 220, and 204 or 186 nm, and a distribution thereof can be observed in a range of from 186 to 220 nm in the photographed portion. The lower part of the figure shows a SEM photograph taken at a magnification of 1,000 times. Even after the nanofiber structure in FIG. 8 was heat treated at 400 °C for 8 hours, the nanofiber structure maintains the structure similar to that of FIG. 7, and thus it was observed that it had a sufficient resistance in severer heat environment namely at 400 °C for 8 hours.

FIG. 8 shows a photograph of a nanofiber structure which was heat treated at 400 °C for "16 hours," wherein the SEM photograph shown in the upper part was taken at a magnification of 30,000 times, and a plurality of diameters of nanofibers were shown. The diameters are 163, 179, 192, and 198 or 208 nm, and a distribution thereof can be observed in a range of from 163 to 208 nm in the photographed portion. The lower part of the figure shows a SEM photograph taken at a magnification of 1,000 times. Even after the nanofiber structure in FIG. 8 was heat treated at 400 °C for "16 hours," the nanofiber structure maintained a structure similar to that of FIG. 7 (room temperature) and that of FIG. 8 (400 °C for 8 hours), and thus it was observed that it had a sufficient resistance in the severer heat environment, namely at 400 °C for 16 hours).

As shown in these SEM photographs, in the nanofiber structure according to the present Example, there was no change in the nanofiber structure after 8 hours and even after 16 hours at 400 °C. That is, the nanofiber structure greatly excels in heat resistance and has high utility value in a use in which it is placed in severe heat environment for a long time. Moreover, as described below, the nanofiber structure according to the present embodiment is very excellent in water resistance and air permeability, and applications in a very wide range of industrial uses are expected. Specifically, as the ESD apparatus used in the embodiment, there is also a mass-produced type in which many nozzles are provided, so that it is possible to mass-produce polyimide resin nanofiber structures at very low cost.

<Waterproof Pressure Measurement>

The measurement was performed in accordance with the JIS-L1092 water resistance test method B (high water pressure method) by a manual waterproofing degree testing machine (No. 169 manufactured by Kabushiki Kaisha Yasuda Seiki Seisakusho).

<Moisture permeation resistance (RET) measurement>

Under a test environment of 35 °C and 40 %RH, it was carried out by the ISO11092 method.

<Air permeability measurement>

A Frazir value and a Gurley value were measured.

- Frazier value measurement

JIS-L1084 air permeability according to the JIS-L1096 air permeability A method (Frazier method) by using a Frazir Type Air Permeability Tester (No. 415 manufactured by Kabushiki Kaisha Yasuda Seiki Seisakusho).

- Gurley value measurement

Measured in accordance with the JIS-L1096 air permeability B method (Gurley method) and the JIS-P8117 Gurley testing machine method by using a Gurley style Densometer (No. 323 manufactured by Kabushiki Kaisha Yasuda Seiki Seisakusho).

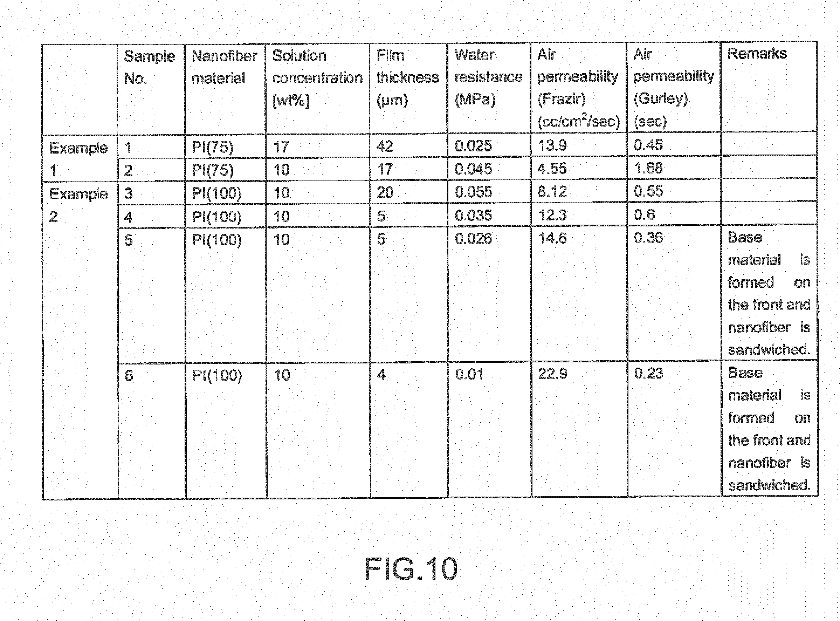

FIG. 10 is a table of measurement of physical properties of water resistance and air permeability of the nanofiber structures of the Examples 1 and 2. A film thickness thereof was measured by a Mitutoyo Digimatic standard outside micrometer. (MDC-25M). The film thickness was 50 μm or less. In the Example 1, the water resistance was 0.025 - 0.045 MPa, and in the Example 2, it was 0.01 - 0.055 MPa, thus the good numerical values were acquired.

In the Frazier method, the air permeability thereof was 4.55 - 13.9 (cc/cm2/sec) in the Example 1 and 8.12 - 35.3 (cc/cm2/sec) in the Example 2 and thus the good numerical values thereof were acquired. Moreover, in Gurley method, it was 0.45 - 1.68 (sec) in the Example 1 and 0.023 - 0.6 (sec) in the Example 2 and thus, the good numerical values were acquired. Thus, in the Examples 1 and 2, the nanofiber structures of polyimide excellent in water resistance and air permeability was produced.

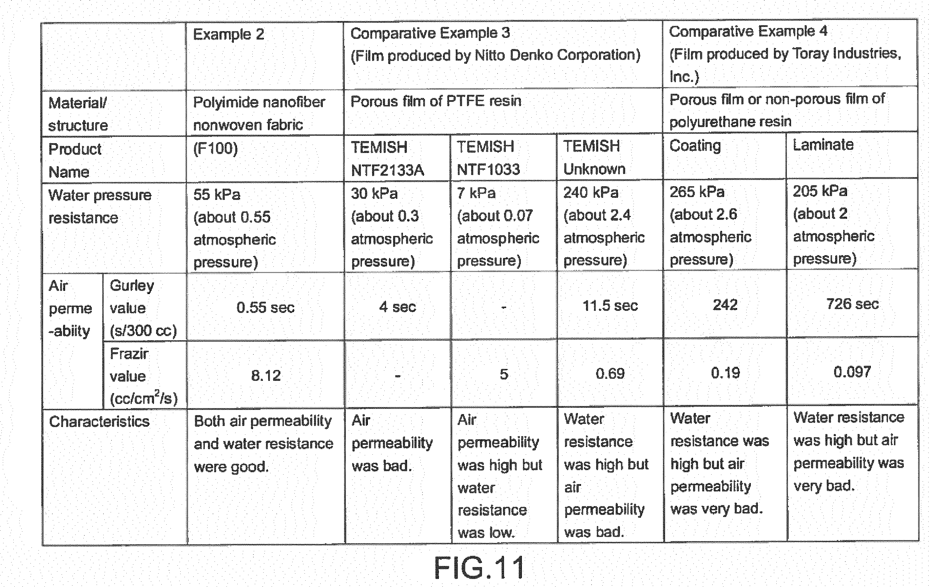

FIG. 11 is a table of measurement of physical properties of water resistance and air permeability of the nanofiber structures according to the Example 2, and those of Comparative Examples 3 and 4. In order to emphasize the excellent characteristic of the nanofiber structure according to the embodiment of the present invention, the water resistance and air permeability of two kinds of commercial polyimide films were measured in the same manner thereas. As shown in the figure, for example, in the Example 2, the air permeability thereof was 0.55 second in a Gurley value, that of the Comparative Examples 3 was 4 to 11.5 seconds, and that of the comparative example 4 was 242 to 762 seconds, and thus it turns out that the physical properties of the present invention were notably excellent. Moreover, when three samples according to the Example 2 were measured by the ISO11092 method, the moisture permeation resistances (RET) thereof were 2.7, 2.7, and 2.8, and an average of 2.7 (m2 and Pa/W). If this result is compared with data disclosed at http://www.gore-tex.jp/news/utmf/2012/activeshell/characteristic.html, it was equivalent to or more than that of ePTFE products, which were known as the best. It is fully possible to obtain higher performance by examining nanofiber production conditions according to the technology of this application and thus it can be said that the moisture permeability thereof was superior to that of the ePTFE products.

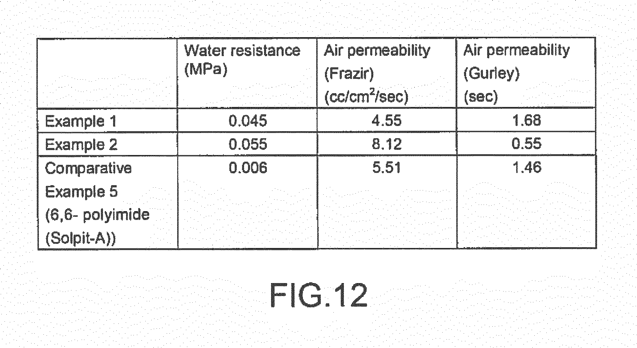

FIG. 12 is a table of measurement of physical properties of air permeability and water resistance of the nanofiber structures according to the Examples 1 and 2 and that of a comparative example 5.

The physical properties which are excellent in air permeability and water resistance may not be necessarily obtained by forming any polyimide resin, which are dissolved in a solvent, into nanofibers. The example thereof will be given below.

<Comparative Example 1>

A sample was produced in the same manner as that of the Examples 1 and 2 by using a NMP solution 6, 6-PI-Solpit-A of a soluble polyimide produced by another company (concentration was 10 weight percent). Since the produced nanofiber nonwoven fabric contains much solvent, unless it is produced while drying, holes of the nanofiber are closed due to welding and adhesion. No improvement was achieved although various spray conditions (the solution concentration, voltage between the nozzle and the substrate, the liquid sending speed, the nozzle diameter, the distance between the nozzle and the substrate) were adjusted. Moreover, the waterproof pressure thereof was extremely low although the air permeability thereof, which was almost equivalent to that of the nanofiber structure according to the Example 1, was acquired.

Although the present invention has been explained based on the figures and the Examples, it should be noted that it is easy for a person skilled in the art to make various changes and alterations based on this disclosure. Therefore, it should be noted that these changes and alterations are within the scope of the present invention. For example, the conditions of electrospray deposition, the apparatus used herein, the solvent, polyimide of material etc. are only examples, and other equivalent materials, conditions, apparatuses etc. may be replaced with or changed to other similar ones.

Moreover, the thermal conductivity of the nanofiber structure, which was produced in accordance with the Example 2, was measured in a hot wire method (at atmosphere temperature: 22 °C by Model TCi manufactured by C-THERMI), and 0.046 W/mK was obtained as a result of the measurement. That is, it is possible to obtain one with the thermal conductivity of 0.04 to 0.05 W/mK. Although this value is a little larger than that of an urethane foam (0.026 w/mk) etc. which is a high performance foam insulation, it has a big advantage that it is flexible and thin material, compared with a heat insulating foam material, which may not be made thin. The nanofiber structure according to the present invention with the above-mentioned physical properties can be used for various purposes. They are various filters, catalyst support objects, structure materials (especially for high temperature environment), breathable water resistance outdoor/apparel items, flexible and thin heat resistance, heat insulation and insulation material, and medical field, etc.

Moreover, although the above described Examples show that the produced nanofiber structure acquired advanced functionality, such as the air permeability and water resistance, a nanofiber structure which has another functionality can be produced, depending on an attribution of polyimide which is raw material/material. Hereafter, the example is shown below.

For example, a polyimide (brand name "Solpit-S") manufactured by Orient Chemical Industries Co., Ltd. has adhesiveness. In the same manner as that of the above-mentioned Examples, a polyimide solution containing Solpit-S was formed into nanofibers by using the electrospray deposition method (ESD method) according to the technique of the present invention, thereby producing a nanofiber structure.

Of course, this nanofiber structure can be given any or all of characters set forth below, as well as the above-mentioned Examples. In addition, the following properties are not indispensable:

(1) A void ratio thereof is 75% or more.
(2) An average of a pore size distribution is 0.5-2.0 $\mu$m.
(3) A film thickness thereof is 50 $\mu$m or less.

Moreover, it was confirmed that this nanofiber structure maintained the adhesiveness which the Solpit-S had. For example, when the nanofiber structure which used a polyimide other than Solpit-S as raw material was formed on base material, if the adhesive tape was tried to be removed after an adhesive tape was brought in contact with the nanofiber structure side, the nanofiber structure easily feall away from the base material, and thus a unity which was formed by the substrate and the nanofiber structure was lost. However, it was confirmed that in case of the nanofiber structure which used the Solpit-S as raw material, the nanofiber structure and the base material did not fall away from each other, so that adhesiveness was shown between the substrate and the nanofiber structure. That is, it is possible that this nanofiber structure and other material adhere to each other so as to become unified. Thus, in formation of nanofibers according to the technique of the present invention, it was confirmed that the functionality which raw material has, was not lost and thus maintained.

REFERENCE SIGNS LIST

CNT Container
HPS High-voltage power supply
NZL Nozzle

SL Sample solution
TS Target substrate
ESD Electrospray deposition apparatus
WL Wire

**Claims**

1.  A nanofiber structure comprising:

    a polyimide resin having a structure in which

    (1) a void ratio thereof is 75 % or more,
    (2) an average pore diameter distribution thereof is 0.5-2.0 $\mu$m, and
    (3) a film thickness thereof is 50 $\mu$m or less.

2.  The nanofiber structure according to claim 1, wherein a formation of nanofibers is carried out by an electrospray deposition method.

3.  The nanofiber structure according to claim 1, wherein a nanofiber structure is not changed even if heated at 400 °C for 16 hours.

4.  The nanofiber structure according to claim 1, wherein an air permeability thereof is 4.55 cc/cm2/s or more in a JIS-L1096 air permeability A method (Frazier method), or 1.68 s / 300 cc or less by a JIS-P8117 Gurley testing machine.

5.  The nanofiber structure according to claim 1, wherein a moisture permeation resistance (RET) thereof in a ISO11092 method is 3.0 (m2 and Pa/W) or less.

6.  The nanofiber structure according to claim 1, wherein a water resistance thereof is 0.01 or more MPa by JIS-L1092 water-penetration-test B method (high-pressure water method).

7.  The nanofiber structure according to claim 1, wherein a thermal conductivity thereof is within a range of 0.04 - 0.05 W/mK.

8.  The nanofiber structure according to claim 1, wherein the nanofiber structure has an adhesiveness.

FIG.1

# FIG.2

EP 3 279 381 A1

# FIG.3

(A)

**Pore diameter distribution v. diameter (curve fitting)**

Example 1: With mesh base material
(film thickness including the
base material 73.2 μm)
Base weight 4.0g/m²
Void ratio 75.0 %

Mesh base material
Opening distance 56 μm
Opening rate 38 %
Wire diameter 35 μm
Thickness 53 μm

Diameter micrometer (μm)

(B)

**Pore diameter distribution v. diameter (curve fitting)**

Example 1:
Without mesh base material
(film thickness 29.8 μm)

Diameter    Micrometer (μm)

13

# FIG.4

# FIG.5

(A)

### Pore diameter distribution v. diameter (curve fitting)

Example 2: Without mesh base
material (film thickness 37.0 μm)
Base weight 7.9 g/m$^2$
Void ratio 86.4 %

Pore diameter distribution

Diameter micrometer (μm)

(B)

### Pore diameter distribution v. diameter (curve fitting)

Example 2: Without mesh base
material (film thickness 37.5 μm)
Base weight 7.9 g/m$^2$
Void ratio 86.4 %

Pore diameter distribution

Diameter micrometer (μm)

EP 3 279 381 A1

| Fiber / Sample lot | State | Thick-ness [µm] | Density [g/m³] | Heat treatment | Final Temp. History [°C] | DMAc Residue Amount [wt%] | Surface resistivity [x $10^{15}$ Ω] | Volume resistivity [x $10^{15}$ Ω·cm] | CTE [ppm/k] Mono layer | Multi layer |
|---|---|---|---|---|---|---|---|---|---|---|
| Comparative Example 1 (Film A made by Kawamura | Film | 100 | 1.57 | Yes (Film formation temp.) | 200 | 0.75 | 7.5 | 33 | 62.2 | - |
| Comparative Example 2 (Film B made by Kawamura) | Film | 100 | 1.46 | Yes (Film formation temp.) | 200 | 0.53 | 9.3 | 26 | 55.5 | - |
| Example 1 (Structure of FIG. 2) | Nano fiber | 29 | 0.24 | No | Room Temp. | 0.8 | 2.5 | 12 | 29.9 | 36.9 (120 µm) |
|  |  |  |  | Yes (after cured) | 200 | 0.27 |  |  |  |  |
| Example 2 (Structure of FIG. 4 | Nano fiber | 18 | 0.26 | No | Room Temp. | 0.53 | 11.5 | 8.7 | 13.6 | 19 (110 µm) |
|  |  |  |  | Ye (after cured) | 200 | 0.49 |  |  |  |  |

## FIG.6

# FIG.7

Example 2 (RT) 30,000 times

234nm

212nm

225nm

213nm

235nm

15.0kV x30.0k          1.00um

Example 2 (RT)
1,000 times

15.0kV x1.00k          50.0um

## FIG.8

189nm

220nm

204nm

186nm

Example 2 (400 ℃,8 hours)
30,000 times

15.0kV x30.0k          1.00um

Example 2 (400 ℃,8 hours)
1,000 times

15.0kV x1.00k          50.0um

# FIG.9

Example 2 (400 ℃, 16 hours)
30,000 times

192nm

198nm

179nm

163nm

208nm

15.0kV x30.0k　　1.00um

Example 2 (400 ℃, 16 hours)
1,000 times

15.0kV x1.00k　　50.0um

| | Sample No. | Nanofiber material | Solution concentration [wt%] | Film thickness (μm) | Water resistance (MPa) | Air permeability (Frazir) (cc/cm$^2$/sec) | Air permeability (Gurley) (sec) | Remarks |
|---|---|---|---|---|---|---|---|---|
| Example 1 | 1 | PI(75) | 17 | 42 | 0.025 | 13.9 | 0.45 | |
| | 2 | PI(75) | 10 | 17 | 0.045 | 4.55 | 1.68 | |
| Example 2 | 3 | PI(100) | 10 | 20 | 0.055 | 8.12 | 0.55 | |
| | 4 | PI(100) | 10 | 5 | 0.035 | 12.3 | 0.6 | |
| | 5 | PI(100) | 10 | 5 | 0.026 | 14.6 | 0.36 | Base material is formed on the front and nanofiber is sandwiched. |
| | 6 | PI(100) | 10 | 4 | 0.01 | 22.9 | 0.23 | Base material is formed on the front and nanofiber is sandwiched. |

FIG.10

| | Example 2 | Comparative Example 3 (Film produced by Nitto Denko Corporation) | | | Comparative Example 4 (Film produced by Toray Industries, Inc.) | |
|---|---|---|---|---|---|---|
| Material/ structure | Polyimide nanofiber nonwoven fabric | Porous film of PTFE resin | | | Porous film or non-porous film of polyurethane resin | |
| Product Name | (F100) | TEMISH NTF2133A | TEMISH NTF1033 | TEMISH Unknown | Coating | Laminate |
| Water pressure resistance | 55 kPa (about 0.55 atmospheric pressure) | 30 kPa (about 0.3 atmospheric pressure) | 7 kPa (about 0.07 atmospheric pressure) | 240 kPa (about 2.4 atmospheric pressure) | 265 kPa (about 2.6 atmospheric pressure) | 205 kPa (about 2 atmospheric pressure) |
| Air perme-abiity — Gurley value (s/300 cc) | 0.55 sec | 4 sec | - | 11.5 sec | 242 | 726 sec |
| Air perme-abiity — Frazir value (cc/cm²/s) | 8.12 | - | 5 | 0.69 | 0.19 | 0.097 |
| Characteristics | Both air permeability and water resistance were good. | Air permeability was bad. | Air permeability was high but water resistance was low. | Water resistance was high but air permeability was bad. | Water resistance was high but air permeability was very bad. | Water resistance was high but air permeability was very bad. |

FIG.11

EP 3 279 381 A1

| | Water resistance (MPa) | Air permeability (Frazir) (cc/cm$^2$/sec) | Air permeability (Gurley) (sec) |
|---|---|---|---|
| Example 1 | 0.045 | 4.55 | 1.68 |
| Example 2 | 0.055 | 8.12 | 0.55 |
| Comparative Example 5 (6,6- polyimide (Solpit-A)) | 0.006 | 5.51 | 1.46 |

FIG.12

## INTERNATIONAL SEARCH REPORT

| International application No. |
|---|
| PCT/JP2015/060674 |

A. CLASSIFICATION OF SUBJECT MATTER
*D04H1/728(2012.01)i*

According to International Patent Classification (IPC) or to both national classification and IPC

B. FIELDS SEARCHED

Minimum documentation searched (classification system followed by classification symbols)
D04H1/728

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2013-536323 A (Kolon Fashion Material, Inc.),<br>19 September 2013 (19.09.2013),<br>claims; paragraphs [0001], [0002], [0035] to [0045]; examples<br>& US 2013/0084515 A1 & WO 2011/149241 A<br>& EP 2576880 A1 | 1-8<br>1-8 |
| X<br>Y | JP 2014-504951 A (E.I. Du Pont de Nemours & Co.),<br>27 February 2014 (27.02.2014),<br>claims; paragraphs [0010], [0012], [0017] to [0020], [0031] to [0034]; examples<br>& US 2012/0318752 A1 & WO 2012/088205 A1<br>& EP 2654920 A1 | 1-8<br>1-8 |

[×] Further documents are listed in the continuation of Box C.    [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 July 2015 (02.07.15) | 14 July 2015 (14.07.15) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (July 2009)

**INTERNATIONAL SEARCH REPORT**

International application No.

PCT/JP2015/060674

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2005-019026 A (Japan Vilene Co., Ltd.), 20 January 2005 (20.01.2005), claims; paragraphs [0001], [0014], [0018] to [0021], [0060]; examples (Family: none) | 1-8 |
| A | JP 2008-002011 A (Toyobo Co., Ltd.), 10 January 2008 (10.01.2008), claims; paragraphs [0007], [0052]; examples & US 2010/0178830 A1 & WO 2007/148674 A1 & EP 2037029 A1 | 1-8 |
| A | JP 2004-308031 A (Teijin Ltd.), 04 November 2004 (04.11.2004), claims; paragraphs [0013], [0026] to [0029]; examples (Family: none) | 1-8 |
| A | CN 102251307 A (Qingdao Institute of Bioenergy and Bioprocess Technology, Chinese Academy of Sciences), 23 November 2011 (23.11.2011), claims; examples (Family: none) | 1-8 |
| E,X | JP 2015-074846 A (Fuence Co., Ltd.), 20 April 2015 (20.04.2015), entire text (Family: none) | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013513932 A
- JP 2013513931 A
- JP 2009243031 A
- JP 2009270210 A
- JP 2007092078 A
- WO 2009060898 W

**Non-patent literature cited in the description**

- **SATOSHI YODA et al.** *polyimide having flexibility and excellence in heat resistance = silica nanocomposite porous body, http://www.aist.go.jp/aist_j/press_release/pr2013/pr20130121/ pr20130121.html*
- *Polyimide porous membrane, http://www.ube-ind.co.jp/japanese/rd/polyimide_porous_film.htm*